# EUROPÄISCHE PATENTANMELDUNG

(11) **EP 4 039 162 A1**
(43) Veröffentlichungstag der Anmeldung: **10.08.2022**
(21) Anmeldenummer: 22154658.3
(22) Anmeldetag: 02.02.2022
(51) Int. Cl.: A47L 11/40

(54) **SYSTEM ZUM REINIGEN EINER UMGEBUNG**

(30) Priorität: 04.02.2021 DE 102021102655
(71) Anmelder: Vorwerk & Co. Interholding GmbH, 42275 Wuppertal (DE)
(72) Erfinder: Mosebach, Andrej, 59425 Unna (DE); Hayn, Henning, 40723 Hilden (DE)
(74) Vertreter: Müller, Enno

(57) **Zusammenfassung**

Die Erfindung betrifft ein System zum Reinigen einer Umgebung, mit mindestens einem sich selbsttätig fortbewegenden Reinigungsgerät (1), mindestens einer Detektionseinrichtung (2) zur Detektion eines Umgebungsparameters der Umgebung, einer Recheneinrichtung (3) zum Planen einer von dem Reinigungsgerät (1) in einem Umgebungsteilbereich (4 - 22) der Umgebung auszuführenden Reinigungstätigkeit in Abhängigkeit von dem detektierten Umgebungsparameter, einer Datenbank (23), in welcher ein Reinigungsplan mit mindestens einer zukünftig auszuführenden Reinigungstätigkeit gespeichert ist, wobei die Reinigungstätigkeit nach einer zeitlichen Angabe geplant ist, und wobei der Reinigungsplan einen der Reinigungstätigkeit zugeordneten Umgebungsteilbereich (4 - 22) beinhaltet, und einer Steuereinrichtung (24) zum Steuern der Reinigungstätigkeit anhand des Reinigungsplans. Um eine Reinigungseffizienz innerhalb der Umgebungsteilbereiche (4 - 22) der Umgebung zu steigern, wird vorgeschlagen, dass die Detektionseinrichtung (2) eingerichtet ist, eine momentan stattfindende Nutzung eines Umgebungsteilbereiches (4 - 22) der Umgebung betreffende Nutzungsdaten (25) zu detektieren und an die Recheneinrichtung (3) zu übermitteln, wobei die Recheneinrichtung (3) eingerichtet ist, von der Detektionseinrichtung (2) während eines definierten Benutzungszeitraums detektierte Nutzungsdaten (25) aufzusummieren und den Reinigungsplan in Abhängigkeit von den aufsummierten Nutzungsdaten (25) zu planen, wobei je nach den von der Detektionseinrichtung (2) detektieren Nutzungsdaten der Reinigungsplan abgeändert wird, indem eine geplante Reinigungstätigkeit für einen Umgebungsteilbereich (4 - 22), in welchem die Detektionseinrichtung (2) keine Nutzung detektieren konnte, entfällt, und wobei eine geplante Reinigungstätigkeit für einen Umgebungsteilbereich (4 - 22), in welchem eine überdurchschnittlich starke Nutzung stattgefunden hat, in dem Reinigungsplan zeitlich früher eingeplant wird und/oder eine größere Reinigungsdauer umfasst.

## Beschreibung

### Gebiet der Technik

Die Erfindung betrifft ein System zum Reinigen einer Umgebung, mit mindestens einem sich selbsttätig fortbewegenden Reinigungsgerät, mindestens einer Detektionseinrichtung zur Detektion eines Umgebungsparameters der Umgebung, einer Recheneinrichtung zum Planen einer von dem Reinigungsgerät in einem Umgebungsteilbereich der Umgebung auszuführenden Reinigungstätigkeit in Abhängigkeit von dem detektierten Umgebungsparameter, einer Datenbank, in welcher ein Reinigungsplan mit mindestens einer zukünftig auszuführenden Reinigungstätigkeit gespeichert ist, wobei die Reinigungstätigkeit nach einer zeitlichen Angabe geplant ist, und wobei der Reinigungsplan einen der Reinigungstätigkeit zugeordneten Umgebungsteilbereich beinhaltet, und einer Steuereinrichtung zum Steuern der Reinigungstätigkeit anhand des Reinigungsplans.

### Stand der Technik

Reinigungssysteme mit einem oder mehreren sich selbsttätig fortbewegenden Reinigungsgeräten sind im Stand der Technik bekannt. Bei den Reinigungsgeräten kann es sich beispielsweise um Saugroboter, Wischroboter, Polierroboter oder andere handeln. Die Reinigungsgeräte weisen beispielsweise Reinigungselemente wie Bürsten, Wischelemente, Polierelemente oder ähnliches auf, welche geeignet sind, für ein optimales Reinigungsergebnis auf eine zu reinigende Fläche einzuwirken. Des Weiteren ist es bekannt, derartige Reinigungsgeräte automatisch auf der Basis eines Reinigungsplans zu steuern, in welchem Startzeiten, Zeitspannen und/oder Reinigungsintensitäten für vorgeplante Reinigungstätigkeiten in einem oder mehreren Umgebungsteilbereichen gespeichert sind.

Es ist des Weiteren bekannt, mehrere sich selbsttätig fortbewegende Reinigungsgeräte innerhalb eines Systems zu betreiben, wobei eine gemeinsame Datenbank zur Verfügung steht, in welcher eine oder mehrere Reinigungstätigkeiten für eines oder mehrere Reinigungsgeräte gespeichert sind.

Die DE 10 2017113 288 A1 (auch veröffentlicht als US 2018/ 0361569 A1) offenbart beispielsweise ein System mit mehreren Reinigungsgeräten zur automatisch gesteuerten Bearbeitung einer Fläche, wobei eine den Reinigungsgeräten gemeinsam zugeordnete Datenbank nach definierten Regeln geplante Reinigungstätigkeiten enthält. Die Reinigungstätigkeiten werden von einer zentralen Recheneinrichtung des Systems automatisch geplant, beispielsweise in Abhängigkeit von einer durch ein Reinigungsgerät detektieren Verschmutzung eines Teilbereiches einer Fläche definiert.

Obwohl sich die vorgenannten Systeme zur Reinigung einer Umgebung in der Praxis bewährt haben, erfordern diese eine Messung eines Verschmutzungsgrades der in der Umgebung vorhandenen Umgebungsteilbereiche. Dazu sind die Reinigungsgeräte mit einer geeigneten Messtechnik auszustatten, welche einen hohen finanziellen Aufwand für das Reinigungsgerät verursacht. Alternativ ist es erforderlich, einen Verschmutzungsgrad manuell von einem Nutzer oder Reinigungspersonal erheben zu lassen, was eine entsprechende Manpower und Zeitaufwand erfordert.

### Zusammenfassung der Erfindung

Ausgehend von dem vorgenannten Stand der Technik ist es daher Aufgabe der Erfindung, ein System zum Reinigen einer Umgebung so fortzubilden, dass eine effiziente Reinigung auch weitläufiger Umgebungen möglich ist. Insbesondere soll der tatsächliche Reinigungsbedarf in der Umgebung berücksichtigt werden, ohne dass hierzu eine Mitwirkung eines Nutzers erforderlich ist oder Reinigungsgeräte mit kostenintensiver Messtechnik auszustatten sind.

Zur Lösung der vorgenannten Aufgabe wird vorgeschlagen, dass die Detektionseinrichtung eingerichtet ist, eine momentan stattfindende Nutzung eines Umgebungsteilbereiches der Umgebung betreffende Nutzungsdaten zu detektieren und an die Recheneinrichtung zu übermitteln, wobei die Recheneinrichtung eingerichtet ist, von der Detektionseinrichtung während eines definierten Benutzungszeitraums detektierte Nutzungsdaten aufzusummieren und den Reinigungsplan in Abhängigkeit von den aufsummierten Nutzungsdaten zu planen, wobei je nach den von der Detektionseinrichtung detektieren Nutzungsdaten der Reinigungsplan abgeändert wird, indem eine geplante Reinigungstätigkeit für einen Umgebungsteilbereich, in welchem die Detektionseinrichtung keine Nutzung detektieren konnte, entfällt, und wobei eine geplante Reinigungstätigkeit für einen Umgebungsteilbereich, in welchem eine überdurchschnittlich starke Nutzung stattgefunden hat, in dem Reinigungsplan zeitlich früher eingeplant wird und/oder eine größere Reinigungsdauer umfasst.

Erfindungsgemäß wird eine Reinigungstätigkeit des Reinigungsgerätes nun in Abhängigkeit von einer tatsächlich erfolgten Benutzung der Umgebung geplant. Dazu wird im Gegensatz zum Stand der Technik nicht eine konkrete Verschmutzung der Umgebungsteilbereiche der Umgebung detektiert, sondern vielmehr eine tatsächliche Nutzung eines Umgebungsteilbereiches. Die Recheneinrichtung des Systems ermittelt somit, welche Umgebungsteilbereiche in einem definierten Zeitraum benutzt wurden und deswegen gereinigt werden müssen, und welche Umgebungsteilbereiche nicht benutzt wurden und daher nicht gereinigt werden müssen. Das Reinigungsgerät kann dann mittels der Steuereinrichtung so gesteuert werden, dass nur die tatsächlich benutzten Umgebungsteilbereiche gereinigt werden, was insgesamt eine schnellere und damit kostensparende Behandlung der gesamten Umgebung ermöglicht. Zudem kann auch eine manuelle Reinigung von insbesondere Überbodenflächen durch menschliche Reinigungsfachkräfte entfallen, da in einem Umgebungsteilbereich, beispielsweise einem Raum einer Büroetage, in welchem keine Personen anwesend waren, üblicherweise auch keine Verschmutzung von Überbodenflächen, wie beispielsweise Schreibtischen und ähnlichem, stattgefunden hat. Die Detektionseinrichtung kann zur Erfassung einer Nutzung grundsätzlich eine Einrichtung eines Reinigungsgerätes sein. Bevorzugt ist die Detektionseinrichtung des Systems jedoch separat zu dem Reinigungsgerät ausgebildet, so dass eine eigene Steuer- und Auswerteeinrichtung des Reinigungsgerätes nicht durch aufwendige Detektions- und Auswertetätigkeiten belastet wird. Die Detektionseinrichtung ist bzw. die mehreren Detektionseinrichtungen sind vorzugsweise in der Umgebung platziert und dabei besonders bevorzugt definierten Umgebungsteilbereichen der Umgebung, beispielsweise Räumen eines Grundrisses, zugeordnet. Bei einer Büroumgebung kann es sich bei einem Umgebungsteilbereich beispielsweise um ein Besprechungszimmer, eine Gemeinschaftsküche, ein Großraumbüro oder dergleichen handeln. Des Weiteren kann ein Umgebungsteilbereich auch ein Anteil eines Raumes sein, beispielsweise eine Fläche eines bestimmten Arbeitsplatzes eines Großraumbüros. Die Detektionseinrichtung kann ebenso wie das mindestens eine Reinigungsgerät in ein Kommunikationssystem eingebunden sein. Dazu weist die Detektionseinrichtung, ebenso wie das Reinigungsgerät, beispielsweise ein drahtloses Kommunikationsmodul, insbesondere ein WLAN-Modul, auf. Die Recheneinrichtung und Datenbank des Systems sind ebenso in das Kommunikationsnetzwerk eingebunden, so dass Daten von der Detektionseinrichtung an die Recheneinrichtung und schließlich die Datenbank übertragen werden können. Die Datenbank und die Recheneinrichtung sind vorzugsweise Teil eines zentralen Computergerätes des Systems. Beispielsweise kann das Computergerät ein Server, insbesondere ein sogenannter Cloud-Server, sein, welcher beispielsweise einem Hersteller der Reinigungsgeräte bzw. des Systems gehört. Der in der Datenbank gespeicherte Reinigungsplan beinhaltet eine Mehrzahl von Reinigungstätigkeiten für eines oder mehrere Reinigungsgeräte des Systems, welche beispielsweise nach Wochentagen, Uhrzeiten, Kalenderdaten oder ähnlichen zeitlichen Angaben geplant sind. Der Reinigungsplan beinhaltet des Weiteren den Reinigungstätigkeiten zugeordnete Umgebungsteilbereiche, so dass die Steuereinrichtung des Systems Kenntnis darüber hat, welche Reinigungstätigkeit in welchem Umgebungsteilbereich der Umgebung auszuführen ist. Je nach den von der Detektionseinrichtung detektierten Nutzungsdaten, wird dieser Reinigungsplan durch die Recheneinrichtung des Systems erstellt bzw. abgeändert, wobei geplante Reinigungstätigkeiten für Umgebungsteilbereiche, in welchen die Detektionseinrichtung keine Nutzung detektieren konnte, ganz entfallen, und wobei Umgebungsteilbereiche, in welchen stattdessen eine überdurchschnittlich starke Nutzung stattgefunden hat, in dem Reinigungsplan zeitlich früher eingeplant werden und/oder eine größere Reinigungsdauer umfassen.

Es wird vorgeschlagen, dass die Nutzungsdaten Informationen über eine Anwesenheit und/oder eine Fortbewegung mindestens einer sich in der Umgebung aufhaltenden Person aufweisen. In diesem Zusammenhang kann die Detektionseinrichtung insbesondere einen Anwesenheitssensor und/oder einen Bewegungssensor und/oder einen Durchgangssensor und/oder einen Ortungssensor für Mobilgeräte aufweisen. Die Nutzungsdaten beinhalten somit Informationen über eine Präsenz einer oder mehrerer Personen in einem mit der Detektionseinrichtung ausgestatteten Umgebungsteilbereich der Umgebung, wobei eine Präsenz gekennzeichnet sein kann durch eine Anwesenheit einer Person, eine Fortbewegung der Person durch den Umgebungsteilbereich oder eine Fortbewegung einer Person in den Umgebungsteilbereich hinein oder aus dem Umgebungsteilbereich heraus. Die Detektionseinrichtung kann beispielsweise einen Bewegungssensor aufweisen, wie er bei Beleuchtungseinrichtungen mit Bewegungssensor bekannt ist. Darüber hinaus kann die Detektionseinrichtung auch einen Wärmesensor, beispielsweise Infrarotsensor, aufweisen, welcher die Anwesenheit einer Person in einem Umgebungsteilbereich detektieren kann. Auch können beispielsweise Lichtschranken im Bereich einer Zugangstür zu einem bestimmten Umgebungsteilbereich eingesetzt werden. Des Weiteren ist es möglich, dass Mobilgeräte, die eine Person üblicherweise mit sich trägt, geortet werden. Solche Mobilgeräte können beispielsweise Mobiltelefone, Tablet-Computer oder ähnliches sein. Anhand der Ortungsdaten der mobilen Endgeräte kann eine sogenannte "Heatmap" erstellt werden, welche eine Fortbewegungsroute der jeweiligen Person durch die Umgebung beinhaltet. Die Detektionseinrichtung kann separat ausgebildete und in einem oder mehreren Umgebungsteilbereichen der Umgebung platzierte Sensoren aufweisen, oder Sensoren, welche in andere Objekte der Umgebung integriert sind. Beispielsweise kann ein Sensor in eine Lampe integriert sein, welche Teil einer automatisierten Lichtsteuerung von zum Beispiel Büroräumen ist.

Es wird vorgeschlagen, dass die Nutzungsdaten eine Nutzungsstartzeit und/oder eine Nutzungsdauer und/oder eine Nutzungshäufigkeit eines Umgebungsteilbereiches und/oder eine Anzahl von in dem Umgebungsteilbereich anwesenden Personen aufweisen. In Abhängigkeit davon kann die Recheneinrichtung dann ermitteln, wann, wie lange und/oder wie oft eine Reinigungstätigkeit in einem bestimmten Umgebungsteilbereich auszuführen ist. Auch kann eine Intensität einer Reinigungstätigkeit, ein bevorzugt zu verwendendes Reinigungswerkzeug des Reinigungsgerätes oder ähnliches bestimmt werden. Durch die Detektion der Anzahl von in dem Umgebungsteilbereich während des definierten Benutzungszeitraums anwesenden Personen können die Nutzungsdaten ebenfalls eine Information über eine Nutzungsintensität erhalten, d. h. nicht nur darüber, ob ein bestimmter Umgebungsteilbereich benutzt wurde, sondern ob beispielsweise eine als maximal definierte Anzahl von Personen pro definierter Zeitspanne in dem Umgebungsteilbereich anwesend war und/oder wie hoch die Maximalanzahl ausgeschöpft wurde.

Vorteilhaft kann vorgesehen sein, dass die Datenbank eine einen Grundriss der Umgebung aufweisende Umgebungskarte aufweist, in welcher ein Standort und/oder ein Detektionsbereich der mindestens einen Detektionseinrichtung eingetragen ist. Die Detektionseinrichtung ist somit einer bestimmten Position innerhalb der Umgebungskarte zugeordnet. Vorzugsweise verfügen mehrere Detektionseinrichtungen des Systems über eine eineindeutige Identifikationsnummer, welche mit einem bestimmten Ort in der Umgebungskarte verlinkt ist. Von der Detektionseinrichtung detektierte Nutzungsdaten können dadurch mit der Identifikationsnummer verknüpft werden, so dass die Recheneinrichtung die von dieser Detektionseinrichtung detektierten Nutzungsdaten automatisch dem dazu korrespondierenden Ort und/oder Umgebungsteilbereich in der Umgebungskarte zuordnen kann. Jede von mehreren Detektionseinrichtungen weist vorzugsweise eine Adresse sowie Zugangsdaten auf, mittels welchen die Detektionseinrichtung mit der Umgebungskarte verknüpft werden kann. Je nach der Ausgestaltung der Detektionseinrichtung kann der Detektionsbereich der Detektionseinrichtung eine unterschiedliche geometrische Form aufweisen. Beispielsweise kann ein Detektionsbereich kreisförmig um den Standort der Detektionseinrichtung ausgebildet sein. Ebenso sind jedoch auch Ausführungen von Detektionseinrichtungen möglich, bei welchen der Detektionsbereich lediglich einen bestimmten Kreisabschnitt um den Standort der Detektionseinrichtung abdeckt, beispielsweise einen Winkelbereich von 180 Grad, 130 Grad oder dergleichen. Je nach dem Standort der jeweiligen Detektionseinrichtung in der Umgebung kann eine bevorzugte Ausgestaltung des Detektionsbereiches verwendet werden. Darüber hinaus ist es auch möglich, dass ein Detektionsbereich einer Detektionseinrichtung nicht unmittelbar an einen Standort der Detektionseinrichtung angrenzt. Dies ist beispielsweise der Fall, wenn eine Detektionseinrichtung einen "blinden Bereich" oder "toten Winkel" aufweist, welcher sich in einem Nahbereich der Detektionseinrichtung befindet.

Des Weiteren wird vorgeschlagen, dass die Recheneinrichtung des Systems eingerichtet ist, die Nutzungsdaten der mindestens einen Detektionseinrichtung zugehörig zu dem Standort der Detektionseinrichtung und/oder zugehörig zu dem Detektionsbereich der Detektionseinrichtung in der Umgebungskarte und/oder einer mit der Umgebungskarte verknüpften separaten Datei zu speichern. Die Nutzungsdaten können beispielsweise durch eine optische Markierung in der Umgebungskarte gespeichert werden. Beispielsweise können benutzte Umgebungsteilbereiche in einer anderen Farbe dargestellt werden als nicht benutzte Umgebungsteilbereiche. Somit ergibt sich für einen Nutzer des Systems eine grafische Darstellung der Umgebungskarte, in welcher dieser unmittelbar erkennen kann, welche Umgebungsteilbereiche genutzt wurden, und welche ungenutzt geblieben sind. Des Weiteren können auch detailliertere Nutzungsdaten in der Umgebungskarte gespeichert werden oder besonders bevorzugt in einer mit der Umgebungskarte verknüpften separaten Datei. Insbesondere in einer separaten Datei ist es möglich, eine Vielzahl weiterer Nutzungsdaten zu hinterlegen, beispielsweise einen Zeitpunkt, zu welchem eine Benutzung eines bestimmten Umgebungsteilbereiches begonnen hat, eine Uhrzeit, zu welcher keine Benutzung des Umgebungsteilbereiches mehr stattgefunden hat, eine Anzahl von Personen, welche den Umgebungsteilbereich über einen bestimmten Zeitraum genutzt haben und dergleichen. Die Nutzungsdaten können dabei einem Umgebungsteilbereich zugeordnet werden, in welchen der Standort der Detektionseinrichtung und/oder der Detektionsbereich der Detektionseinrichtung fällt. Des Weiteren kann eine mit der Umgebungskarte verknüpfte separate Datei auch eine Tabelle beinhalten, in welcher in verschiedenen Zeilen und Spalten einerseits definierte Umgebungsteilbereiche, und andererseits den jeweiligen Umgebungsteilbereich betreffende Nutzungsdaten aufgelistet sind. Diese Tabelle kann der Nutzer vorzugsweise mittels einer Applikation ansehen und bearbeiten, welche auf einem externen Endgerät gespeichert ist. Dieses externe Endgerät kann vorzugsweise ein mobiles Endgerät, wie beispielsweise ein Tablet-Computer oder ein Mobiltelefon, sein. Die Detektionseinrichtungen des Systems werden in Bezug auf aktuelle Detektionssignale überwacht. Sobald ein Detektionssignal von einer der Detektionseinrichtungen erfasst wurde, werden zugehörige Nutzungsdaten in der Tabelle für den betroffenen Umgebungsteilbereich vermerkt.

In Abhängigkeit von den detektierten Nutzungsdaten kann die Recheneinrichtung dann zu reinigende Umgebungsteilbereiche und nicht zu reinigende Umgebungsteilbereiche in der Umgebungskarte definieren. Die zu reinigenden Umgebungsteilbereiche können dann später im Rahmen des Reinigungsplans, insbesondere entlang einer vorgeplanten Reinigungsroute des Reinigungsgerätes, gereinigt werden.

Zusätzlich kann in der Umgebungskarte mindestens ein Umgebungsteilbereich definiert sein, welcher unabhängig von den detektierten Nutzungsdaten zu reinigen ist. Beispielsweise kann in der Umgebung ein Eingangsbereich, Flur oder Hauptdurchgangsweg gegeben sein, welcher häufig benutzt wird, da dieser einen Zugangsweg zu anderen Umgebungsteilbereichen der Umgebung bereitstellt. Dieser Umgebungsteilbereich muss somit keine Detektionseinrichtung aufweisen, sondern kann regelmäßig in einen Reinigungsplan mit einbezogen werden. Insbesondere kann eine Reinigung dieses Umgebungsteilbereiches in regelmäßigen Abständen vorgesehen sein, unabhängig von diesen Umgebungsteilbereich betreffenden Nutzungsdaten.

Es wird des Weiteren vorgeschlagen, dass die Recheneinrichtung eingerichtet ist, die detektierten Nutzungsdaten mit definierten Referenznutzungsdaten zu vergleichen und in Abhängigkeit von einem daraus resultierenden Vergleichsergebnis eine von dem Reinigungsgerät zu beachtende Reihenfolge der zu reinigenden Umgebungsteilbereiche und/oder eine in einem Umgebungsteilbereich anzuwendende Reinigungsintensität und/oder eine Wiederholungshäufigkeit einer in einem Umgebungsteilbereich auszuführenden Reinigungstätigkeit zu definieren oder zu ändern. Gemäß dieser Ausgestaltung können die Nutzungsdaten dahingehend ausgewertet werden, ob ein Umgebungsteilbereich während eines definierten Zeitfensters beispielsweise gar nicht, gering, mittel oder sehr stark benutzt wurde. Dazu können die Nutzungsdaten mit einem oder mehreren definierten Referenznutzungsdaten verglichen werden, welche definierte Schwellwerte darstellen, die beispielsweise eine Nutzungszeit, Nutzungsdauer, Nutzungsintensität, Nutzungshäufigkeit und/oder eine Anzahl von in dem Umgebungsteilbereich pro Zeitspanne anwesenden Personen und/oder eine daraus errechnete Kennzahl angeben. Eine aus den Nutzungsdaten berechnete Kennzahl können beispielsweise aufsummierte Benutzungszeiträume, errechnet aus jeweils einer Benutzungsstartzeit und einer Benutzungsendzeit, sein. Eine weitere Kennzahl kann ein prozentualer zeitlicher Nutzungsanteil eines Umgebungsteilbereiches bezogen auf eine regelmäßige Bürozeitspanne eines Arbeitstages in einem Bürogebäude sein, errechnet aus aufaddierten Benutzungszeiträumen geteilt durch Bürozeitspanne. Eine weitere Kennzahl kann eine Nutzungsintensität sein, welche sich aus einer Anzahl von Personen berechnet, die einen Umgebungsteilbereich im Laufe einer bestimmten Zeitspanne, beispielsweise ebenfalls der gesamten Bürozeit eines Arbeitstages, benutzt haben. Diese Kennzahlen können in bestimmte Klassen eingruppiert sein, beispielsweise niedrig, mittel, hoch. Des Weiteren kann eine Kennzahl errechnet werden aus der vorgenannten Nutzungsintensität und dem prozentualen zeitlichen Nutzungsanteil des jeweiligen Umgebungsteilbereiches. Anhand dieser errechneten Kennzahl für den Aktivitätslevel in dem jeweiligen Umgebungsteilbereich kann dann eine bestimmte Reinigungsintensität für den jeweiligen Umgebungsteilbereich festgelegt werden, beispielsweise kann für eine Kennziffer "Aktivitätslevel", die zwischen 20 Prozent und 50 Prozent liegt, eine relativ geringe Reinigungsintensität vorgesehen sein, bei einem Wert zwischen 50 Prozent und 80 Prozent eine mittlere Reinigungsintensität und in einem Bereich von größer als 80 Prozent eine hohe Reinigungsintensität. In gleieher Art und Weise kann anstatt oder zusätzlich zu einer definierten Reinigungsintensität eine Wiederholungshäufigkeit für eine bestimmte auszuführende Reinigungstätigkeit festgelegt werden und/oder eine Reihenfolge der zu reinigenden Umgebungsteilbereiche, wobei ein Umgebungsteilbereich mit einer im Gegensatz zu anderen Umgebungsteilbereichen der Umgebung erhöhten Nutzung zuerst gereinigt wird. Das gleiche Vorgehen lässt sich auch dazu verwenden, um zusätzlich Reinigungstätigkeiten von Reinigungsfachkräften zu planen. Bei der Planung von manuellen Reinigungstätigkeiten ist es in der Regel notwendig, die Umgebungsteilbereiche, der Umgebung, welche zu reinigen sind, anders zu definieren, weil dabei der Fokus auf der Reinigung von Überbodenflächen liegt, beispielsweise auf der Reinigung von Mobiliaroberflächen. Zusätzlich kann durch die vorausgehende Detektion und Auswertung von Nutzungsdaten auch bestimmt werden, wann beispielsweise Verbrauchsmaterialien in der Umgebung auszutauschen sind, beispielsweise Druckerpapier, Toilettenpapier, Kaffeebohnen oder ähnliches.

Schließlich wird vorgeschlagen, dass die Recheneinrichtung eingerichtet ist, mehrere in unterschiedlichen Umgebungsteilbereichen auszuführende Reinigungstätigkeiten in dem Reinigungsplan mit einer definierten Rangfolge so zueinander zu definieren, dass eine Reinigungstätigkeit in einem ersten Umgebungsteilbereich, dessen Nutzungsdatum ein diesem zugeordnetes definiertes Referenznutzungsdatum überschreitet, in der Rangfolge einen höheren Rang erhält und damit vorrangig vor einer Reinigungstätigkeit in einem zweiten Umgebungsteilbereich, dessen Nutzungsdatum ein diesem zugeordnetes definiertes Referenznutzungsdatum unterschreitet, ausgeführt wird. Gemäß dieser Ausgestaltung erfolgt eine Priorisierung von Reinigungstätigkeiten für unterschiedliche Umgebungsteilbereiche, so dass die länger und/oder häufiger und/oder intensiver genutzten Umgebungsteilbereiche vorrangig gereinigt werden. Das Reinigungsgerät kann somit beispielsweise zunächst Umgebungsteilbereiche reinigen, die häufig betreten werden. Sollte das Reinigungsgerät nicht in der Lage sein, die gesamte Fläche des betreffenden Umgebungsteilbereiches auf einmal zu reinigen, so kann die Reinigungstätigkeit auf mehrere Tage oder mehrere definierte Zeitfenster verteilt werden, wobei immer die am meisten benutzten Umgebungsteilbereiche der Umgebung zuerst gereinigt werden. Zudem können die manuell durch menschliche Reinigungsfachkräfte gereinigten Umgebungsteilbereiche zusätzlich eine Prioritätsänderung für eine automatische Reinigungstätigkeit eines Reinigungsgerätes auslösen. Sofern beispielsweise festgestellt oder der Steuereinrichtung des Reinigungsgerätes mitgeteilt wird, dass eine Reinigungsfachkraft manuell in einem bestimmten Umgebungsteilbereich aktiv war, kann der Rang desjenigen Umgebungsteilbereiches in einer definierten Rangfolge nach hinten versetzt werden. Alternativ kann es durch eine manuelle Überbodenreinigung durch eine Reinigungsfachkraft zu einer zusätzlichen Verunreinigung einer darunterliegenden Bodenfläche kommen, so dass beispielsweise unabhängig von den Nutzungsdaten in dem jeweiligen Umgebungsteilbereich eine baldmögliche Reinigung durch das automatische Reinigungsgerät vorteilhaft ist. Beispielsweise kann durch das Reinigungsgerät dann eine Sonderreinigung bei nächster Gelegenheit durchgeführt werden.

### Kurze Beschreibung der Zeichnungen

Im Folgenden wird die Erfindung anhand von Ausführungsbeispielen näher erläutert. Es zeigen:
- Fig. 1: einen Ausschnitt eines Systems zum Reinigen einer Umgebung mit einem Reinigungsgerät, einer Detektionseinrichtung und einem Server,
- Fig. 2: eine Umgebungskarte einer Umgebung mit mehreren Umgebungsteilbereichen, in welchen Detektionseinrichtungen platziert sind,
- Fig. 3: die Umgebungskarte gemäß Fig. 2 nach einer Detektion von Nutzungsdaten durch die Detektionseinrichtungen,
- Fig. 4: eine Datei mit Nutzungsdaten zu den Umgebungsteilbereichen und daraus ermittelten Kennziffern,
- Fig. 5: eine Datei mit Zuordnung von Reinigungsintensitäten zu Referenznutzungsdaten,
- Fig. 6: eine Umgebungskarte mit Detektionseinrichtungen gemäß einer zweiten Ausführungsform,
- Fig. 7: die Umgebungskarte gemäß Fig. 6 nach einer Detektion von Nutzungsdaten,
- Fig. 8: die Umgebungskarte gemäß den Fig. 6 und 7 nach Ergänzung eines Fortbewegungspfades.

### Beschreibung der Ausführungsformen

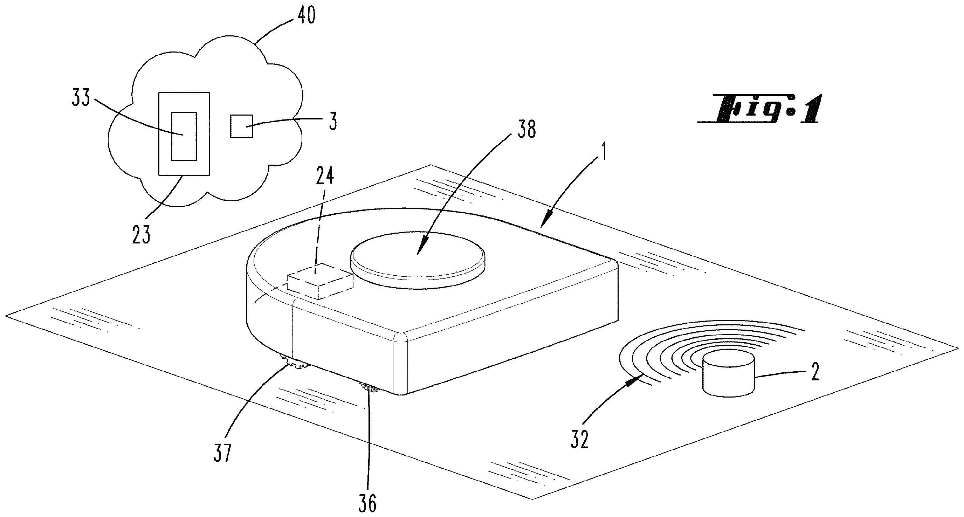

Figur 1 zeigt zunächst beispielhaft ein System zum Reinigen einer Umgebung mit hier mindestens einem beispielhaft dargestellten sich selbsttätig fortbewegenden Reinigungsgerät 1 und einer von mehreren in einer Umgebung anordenbaren Detektionseinrichtungen 2 sowie einem Server 40, hier einem sogenannten "Cloud"-Server 40, in welchem eine Recheneinrichtung 3 sowie eine Datenbank 23 mit einer oder mehreren Dateien 33 verwirklicht sind. Sowohl das Reinigungsgerät 1, als auch die Detektionseinrichtung 2 sind stellvertretend für weitere mögliche Reinigungsgeräte 1 bzw. Detektionseinrichtungen 2, die in das System integriert sein können. Das Reinigungsgerät 1, die Detektionseinrichtung 2 und der Server 40 sind über ein Kommunikationssystem, insbesondere ein drahtloses Kommunikationssystem, miteinander verbunden. Hierzu weisen diese Kommunikationsmodule auf, beispielsweise WLAN-Module.

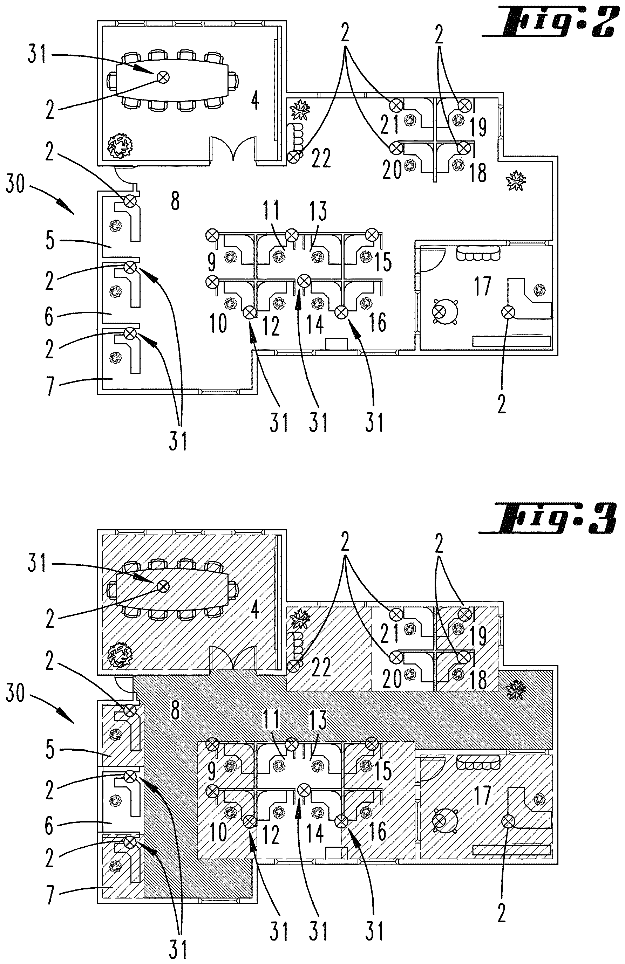

Das Reinigungsgerät 1 ist hier beispielhaft als ein sich selbsttätig fortbewegender Saugroboter dargestellt. Ohne Änderung des Erfindungsgedankens kann das Reinigungsgerät 1 jedoch ein anderes Gerät zum Ausführen einer Reinigungs- oder Pflegeaufgabe sein, beispielsweise ein Wischgerät, ein kombiniertes Saug-Wischgerät, ein Poliergerät, Bohnergerät oder dergleichen. Zur selbsttätigen Fortbewegung besitzt das Reinigungsgerät 1 Räder 37, die von einem nicht weiter dargestellten Antriebssystem angetrieben werden. Je nach dem Gerätetyp des Reinigungsgerätes 1 weist dieses des Weiteren ein oder mehrere Reinigungselemente 36 auf. Hier verfügt das Reinigungsgerät 1 beispielsweise über eine rotierende Bürstenwalze. Das Reinigungsgerät 1 hat des Weiteren eine Steuereinrichtung 24, welche dazu dient, eine Fortbewegung des Reinigungsgerätes 1 durch die Umgebung zu steuern und dabei Reinigungstätigkeiten zu veranlassen. Die Steuereinrichtung 24 kommuniziert mit der Recheneinrichtung 3 des Systems, um einen von der Recheneinrichtung 3 geplanten Reinigungsplan in Reinigungstätigkeiten des Reinigungsgerätes 1 umzusetzen. Das Reinigungsgerät 1 weist darüber hinaus vorzugsweise einen nicht dargestellten lokalen Speicher auf, in welchem eine Umgebungskarte 30 (siehe Figur 2) gespeichert ist. Die Umgebungskarte 30 weist einen Grundriss der Umgebung auf sowie darin vorhandene Objekte und Raumbegrenzungen, beispielsweise Mobiliar und Wände. Anhand der Umgebungskarte 30 kann sich das Reinigungsgerät 1 bei einer selbsttätigen Fortbewegung in der Umgebung orientieren und selbstlokalisieren. Für die Elektroversorgung der elektrischen Verbraucher des Reinigungsgerätes 1, wie beispielsweise für das Antriebssystem der Räder 37 und/oder des Reinigungselementes 36, weist das Reinigungsgerät 1 einen nicht dargestellten, wiederaufladbaren Akkumulator auf.

Das Reinigungsgerät 1 ist des Weiteren mit einer Navigationseinrichtung 38 ausgestattet. Die Navigationseinrichtung 38 verfügt über eine Sensorik, beispielsweise eine Abstandsmesseinrichtung, die Abstände zu Objekten in der Umgebung messen kann. Die Sensorik weist beispielsweise eine Laserdiode auf, deren emittierter Lichtstrahl aus einem Gehäuse des Reinigungsgerätes 1 herausgeführt und um eine in der gezeigten Orientierung des Reinigungsgerätes 1 vertikal stehende Drehachse rotierbar ist. Dadurch ist insbesondere eine Rundum-Abstandsmessung um das Reinigungsgerät 1 möglich. Mit Hilfe der Sensorik kann die Umgebung in einer bevorzugt horizontalen Ebene vermessen werden, d. h. in einer zu einer zu bearbeitenden Fläche parallelen Ebene. Im Ergebnis kann das Reinigungsgerät 1 unter Vermeidung von Kollisionen mit Hindernissen in der Umgebung verfahren. Die mittels der Sensorik aufgenommenen Abstandsdaten werden zur Erstellung der beispielhaft dargestellten Umgebungskarte 30 genutzt. Des Weiteren kann das Reinigungsgerät 1 zur Navigation und Selbstlokalisierung beispielsweise einen nicht dargestellten Odometrie-Sensor aufweisen, welcher eine von dem Reinigungsgerät 1 zurückgelegte Wegstrecke misst. Auch ist es möglich, dass das Reinigungsgerät 1 beispielsweise einen oder mehrere Kontaktsensoren oder dergleichen aufweist.

Das Reinigungsgerät 1 steht über eine drahtlose Kommunikationsverbindung in Kontakt mit dem Server 40, insbesondere der zentralen Recheneinrichtung 3 des Systems sowie der zentral gespeicherten Datenbank 23. Des Weiteren kann ein Nutzer über ein hier nicht weiter dargestelltes externes Endgerät auf die Datenbank 23 des Systems zugreifen, in welcher einerseits die von dem Reinigungsgerät 1 erstellte Umgebungskarte 30 und andererseits eine oder mehrere andere Dateien 33 mit beispielsweise Reinigungsplänen gespeichert sind. Auf dem externen Endgerät des Nutzers, beispielsweise einem Mobiltelefon oder einem Tablet-Computer, ist eine Applikation installiert, über welche der Nutzer dem Reinigungssystem die Standorte 31 von Detektionseinrichtungen 2 mitteilen kann, welche die Recheneinrichtung 3 des Systems dann in die Umgebungskarte 30 einträgt bzw. in einer separaten Datei 33, welche mit der Umgebungskarte 30 verknüpft ist, derart, dass ein durch Koordinaten gekennzeichneter Standort 31 der Detektionseinrichtung 2 gespeichert wird. Zur Identifikation der Detektionseinrichtungen 2 des Systems hat jede Detektionseinrichtung 2 eine eineindeutige Identifikationsnummer, welche mit entsprechenden Koordinaten der Umgebungskarte 30 gespeichert oder verlinkt wird. Von der Detektionseinrichtung 2 detektierte Daten werden dieser Identifikationsnummer zugeordnet und können von der Recheneinrichtung 3 einem bestimmten Standort 31 oder Detektionsbereich 32 in der Umgebungskarte 30 zugeordnet werden.

Figur 2 zeigt exemplarisch eine Umgebungskarte 30, in welcher ein Grundriss einer Etage eines Bürogebäudes dargestellt ist. Die Umgebung ist in eine Mehrzahl von Umgebungsteilbereichen 4 - 22 aufgeteilt, wobei jeder Umgebungsteilbereich 4 - 22 einen bestimmten Raum oder Raumteilbereich des Grundrisses definiert. Die Definition der Umgebungsteilbereiche 4 - 22, d. h. deren Einteilung in bestimmte Teilbereiche der Umgebungskarte 30, kann ein Nutzer des Systems beispielsweise manuell über ein externes Endgerät vornehmen und in der Datenbank 23 des Systems speichern. Hier sind beispielsweise die Umgebungsteilbereiche 4 und 17 separate Räume. Der Umgebungsteilbereich 4 ist beispielsweise ein Besprechungszimmer und der Umgebungsteilbereich 17 ist ein Einzelbüro. Die übrigen Umgebungsteilbereiche 5 - 7, 9 - 16 und 18 - 21 sind einzelnen Arbeitsplätzen eines Großraumbüros zugeordnete Bereiche der Umgebung. Der Umgebungsteilbereich 22 definiert einen Aufenthaltsbereich für Gäste. Der Umgebungsteilbereich 8 ist ein Durchgangsbereich durch die Etage, welcher in der Art eines Flurs eine Verbindung zwischen den einzelnen Räumen, Arbeitsplätzen sowie einer Eingangstür darstellt.

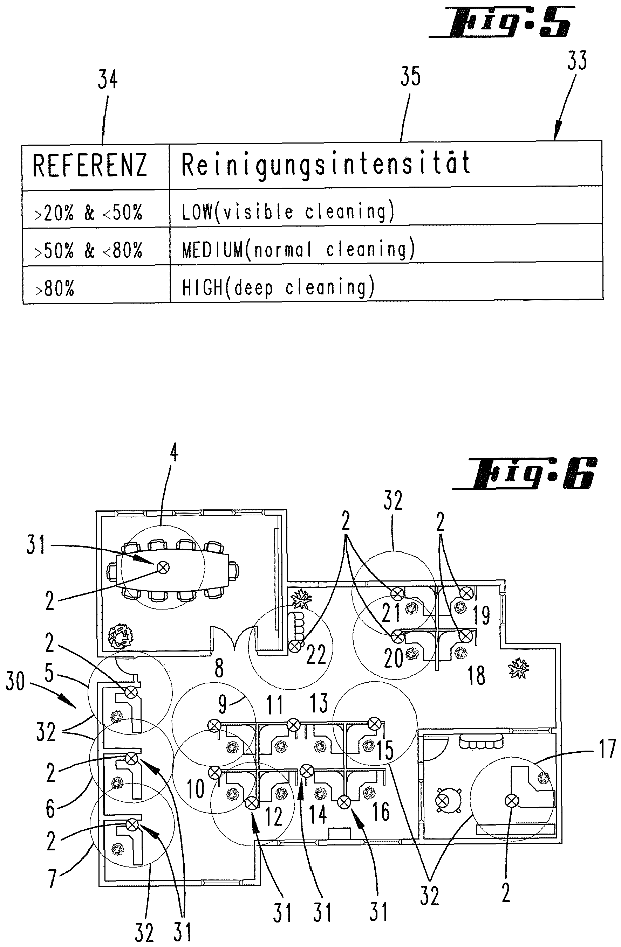

Jedem Umgebungsteilbereich 4 - 7 und 9 - 22 ist eine eigene Detektionseinrichtung 2 zugeordnet. Die Detektionseinrichtung 2 kann beispielsweise als Teil einer Lichtsteuerung des Bürogebäudes in eine Lampe integriert sein. Alternativ kann die Detektionseinrichtung 2 jedoch auch einfach als solche in dem jeweiligen Umgebungsteilbereich 4 - 22 angeordnet sein. Jede Detektionseinrichtung 2 weist einen definierten Standort 31 sowie einen Detektionsbereich 32 (siehe zum Beispiel Figur 6) auf, welcher denjenigen Teilbereich angibt, in welchem die Detektionseinrichtung 2 Nutzungsdaten 25 über eine Benutzung des jeweiligen Umgebungsteilbereiches 4 - 22 durch eine oder mehrere Personen detektieren kann. Die Detektionseinrichtungen 2 sind beispielsweise Bewegungssensoren, die eine Bewegung in dem zugeordneten Umgebungsteilbereich 4 - 22 detektieren können. Alternativ können die Detektionseinrichtungen 2 auch als Durchgangssensor, insbesondere mit einer Richtungserkennung, oder als Anwesenheitssensoren, welche zusätzlich auch eine Anzahl von Personen in dem jeweiligen Umgebungsteilbereich 4 - 22 bestimmen können, ausgebildet sein. Des Weiteren ist es möglich, die Detektionseinrichtung 2 mit einem Ortungssensor für Mobilgeräte auszustatten, so dass Bewegungen von Mobilgeräten erkannt werden können, die Personen üblicherweise mit sich tragen. Die in der Umgebung verwendeten Detektionseinrichtungen 2 können jeweils mehrere unterschiedliche Sensoren aufweisen, beispielsweise einen Durchgangssensor und einen Anwesenheitssensor. Des Weiteren kann eine Detektionseinrichtung 2 auch nur ein einziges Detektionsverfahren nutzen. Darüber hinaus kann sich die Detektionseinrichtung 2 eines ersten Umgebungsteilbereiches 4 - 22 von einer Detektionseinrichtung 2 eines zweiten Umgebungsteilbereich 4 - 22 unterscheiden. Zur weiteren vereinfachten Erläuterung der Erfindung wird hier davon ausgegangen, dass alle Detektionseinrichtungen 2 gleichartig als Bewegungssensoren ausgebildet sind und sich deren jeweiliger Detektionsbereich 32 rund um den Standort 31 der Detektionseinrichtung 2 erstreckt.

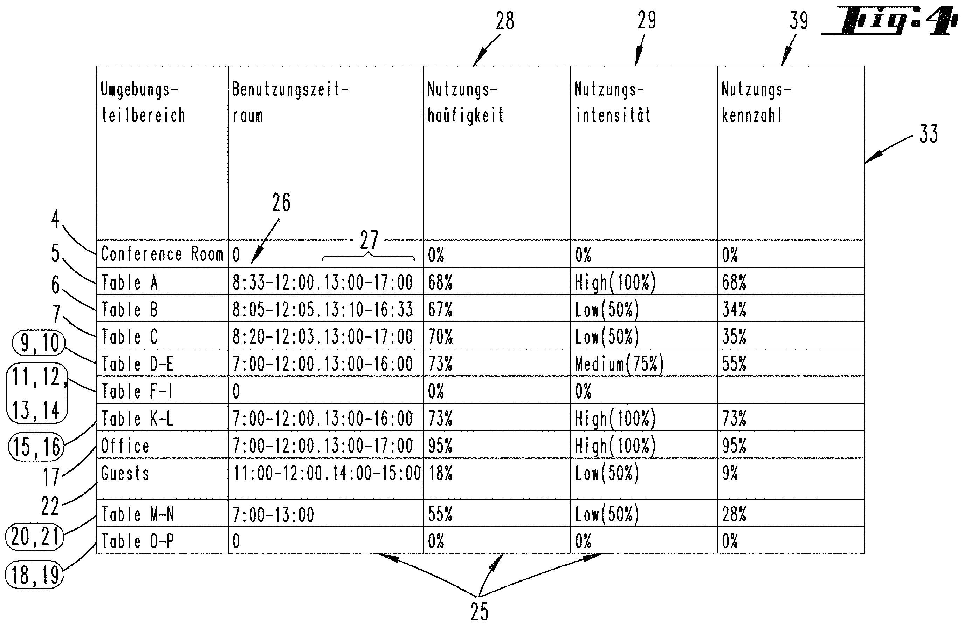

Die Detektion von Nutzungsdaten 25 erfolgt nun so, dass jede der Detektionseinrichtungen 2 in dem von dieser Detektionseinrichtung 2 überwachten Umgebungsteilbereich 4 - 22 detektiert, ob sich eine Person in dem jeweiligen Umgebungsteilbereich 4 - 22 bewegt. Auf der Basis der detektierten Signale der Detektionseinrichtungen 2 lässt sich vorzugsweise nicht nur erkennen, in welchem Umgebungsteilbereich 44 - 22 sich eine oder mehrere Personen aufhielten, sondern auch zu welcher Zeit und wie häufig dies geschah. Aus den gesammelten Informationen kann eine sogenannte ʺHeatmap" erstellt werden, welche beispielhaft in Figur 3 dargestellt ist. Die "Heatmap" kennzeichnet diejenigen Umgebungsteilbereiche 4 - 22, in welchen Bewegungen von Personen stattgefunden haben, wobei die Umgebungsteilbereiche 4 - 22 je nach der Häufigkeit und Zeitdauer der Benutzung mit unterschiedlichen Schraffuren dargestellt sind. Eine so ergänzte Umgebungskarte 30 kann wiederum einem Nutzer des Systems auf seinem externen Endgerät angezeigt werden, so dass er daraus Informationen darüber erhalten kann, welche Umgebungsteilbereiche 4 - 22 häufig genutzt werden, oder welche Umgebungsteilbereiche 4 - 22 eher selten genutzt werden. Darüber hinaus ist es jedoch auch möglich, dass die Umgebungskarte 30 nur von der Recheneinrichtung 3 des Systems bzw. der Steuereinrichtung 24 des Reinigungsgerätes 1 genutzt wird. In diesem Fall ist die Darstellung gemäß Figur 3 lediglich veranschaulichend gemeint. In diesem Fall ist es nicht erforderlich, Nutzungsdaten 25 visuell in die Umgebungskarte 30 einzutragen. Vielmehr kann in diesem Fall eine mit der Umgebungskarte 30 verlinkte Datei 33 vorgesehen sein, welche den Standorten 31 der Detektionseinrichtungen 2 bzw. den Umgebungsteilbereichen 4 - 22 bestimmte Nutzungsdaten 25 zuordnet. Die Datei 33 kann beispielsweise in Tabellenform angelegt sein. Hierauf wird später noch mit Bezug zu Figur 4 eingegangen.

In Figur 3 kennzeichnen die breit schraffierten Umgebungsteilbereiche 4, 5, 7, 9,10,15,16,17,18,19, 22 beispielsweise Bereiche, in welchen während eines definierten Benutzungszeitraums eine Bewegung stattgefunden hat. Der eng schraffierte Umgebungsteilbereich 8 ist ein Umgebungsteilbereich 8, welchem keine Detektionseinrichtung 2 zugeordnet ist, sondern welcher stets zu reinigen ist. Da es sich bei diesem Umgebungsteilbereich 8 hier beispielsweise um einen Flurbereich handelt, ist üblicherweise davon auszugehen, dass dieser von Personen betreten wurde, um zu den Umgebungsteilbereichen 4 - 7 und 9 - 22 zu gelangen. Die nicht schraffierten Umgebungsteilbereiche 6,11,12, 13, 14, 20, 21 wurden in dem definierten Beobachtungszeitraum nicht benutzt. Diese Umgebungsteilbereiche 6, 11, 12, 13, 14, 20, 21 sind hier beispielsweise Arbeitsplätze, die in dem Beobachtungszeitraum nicht benutzt wurden. Die in der Umgebungskarte 30 gespeicherten Nutzungsdaten 25 können anschließend von der Steuereinrichtung 24 des Reinigungsgerätes 2 genutzt werden, um eine gezielte Reinigung mittels des Reinigungsgerätes 1 in den benutzten Umgebungsteilbereichen 4, 5, 7, 9, 10, 15, 16, 17, 18, 19, 22 sowie dem Umgebungsteilbereich 8 durchzuführen. Die nicht benutzten Umgebungsteilbereiche 6,11,12, 13, 14, 20, 21 werden nicht gereinigt.

Ein Beobachtungszeitraum, über welchen Nutzungsdaten 25 aufaddiert werden, kann beispielsweise eine Bürozeit von hier 07:00 Uhr morgens bis 18:00 Uhr nachmittags sein. Der Beobachtungszeitraum wird vorzugsweise zu Beginn eines jeden Arbeitstages oder nach Ausführen einer Reinigungstätigkeit durch das Reinigungsgerät 1 zurückgesetzt. Die Definition der Umgebungsteilbereiche 4 - 22 bleibt üblicherweise bestehen, wobei ein Nutzer des Systems jedoch alternativ gemäß einer weiteren Ausführungsform von Tag zu Tag unterschiedliche Umgebungsteilbereiche 4 - 22 definieren kann, je nachdem, wie die Nutzungsdaten 25 zuvor waren. Falls benachbarte Umgebungsteilbereiche 4 - 22 beispielsweise sehr selten genutzt wurden, können diese zusammengefasst und von nur einer einzigen Detektionseinrichtung 2 überwacht werden.

Figur 4 zeigt beispielhaft eine in der Datenbank 23 des Systems gespeicherte Datei 33, welche eine Tabelle mit den überwachten Umgebungsteilbereichen 4 - 7 und 9 - 22 zugeordneten Nutzungsdaten 25 enthält. Sobald von einer Detektionseinrichtung 2 Nutzungsdaten 25 detektiert werden, werden diese zu dem betreffenden Umgebungsteilbereich 4 - 22 in der Tabelle vermerkt. Die Tabelle enthält hier zum Beispiel insgesamt fünf Spalten, welche von links nach rechts betrachtet die Angabe des jeweiligen Umgebungsteilbereiches 4 - 22, die Angabe einer Nutzungsstartzeit 26 des von der jeweiligen Detektionseinrichtung 2 überwachten Umgebungsteilbereiches 4 - 22 mit einer zugehörigen Nutzungsdauer 27, eine Nutzungshäufigkeit 28, eine Nutzungsintensität 29 aufgrund einer Anzahl von den jeweiligen Umgebungsteilbereich 4 - 22 nutzenden Personen sowie eine Nutzungskennzahl 39, welche als Produkt aus der Nutzungshäufigkeit 28 und der Nutzungsintensität 29 gebildet ist, enthalten. Die Nutzungshäufigkeit 28 ist hier als Prozentsatz berechnet, der einen Anteil der aufaddierten Benutzungszeiträume an dem definierten Beobachtungszeitraum von 07:00 Uhr bis 18:00 Uhr angibt. Die Nutzungsintensität 29 kann vier verschiedene Bereiche angeben, nämlich 0 Prozent dafür, dass sich keine Person in dem jeweiligen Umgebungsteilbereich 4 - 22 aufgehalten hat, 50 Prozent für eine definierte geringe Personenanzahl, 75 Prozent für eine mittlere Personenanzahl und 100 Prozent für eine maximal mögliche Personenanzahl. Die maximale Personenanzahl kann beispielsweise derjenigen Anzahl entsprechen, welche alle Mitarbeiter der Büroumgebung erfasst. Die Nutzungskennzahl 39 besteht aus einem Prozentsatz, welcher die Kennzahlen der Spalte Nutzungsintensität 29 mit den Kennzahlen der Spalte Nutzungshäufigkeit 28 multipliziert. Vor Beginn einer Reinigung der Umgebung durch das Reinigungsgerät 1 wird die vorstehende Tabelle ausgewertet und es wird ermittelt, wieviel Prozent einer Gesamtarbeitszeit, hier von beispielsweise 07:00 Uhr bis 18:00 Uhr, die Detektionseinrichtungen 2 Bewegungen in den zugeordneten Umgebungsteilbereichen 4 - 22 detektiert haben. Die in der Tabelle enthaltenen Nutzungsdaten 25 bzw. die Nutzungskennzahl 39 können anschließend von der Recheneinrichtung 3 des Systems mit definierten Referenznutzungsdaten 34 verglichen werden, um eine für die Reinigung anzuwendende Reinigungsintensität 35 zu bestimmen.

Figur 5 zeigt beispielhaft eine Datei 33, in welcher tabellenartig Referenznutzungsdaten 34 sowie den Referenznutzungsdaten 34 zugeordnete Reinigungsintensitäten 35 gespeichert sind. Die Recheneinrichtung 3 des Systems kann die in der Tabelle gemäß Figur 4 errechneten Nutzungskennzahlen 39 mit den definierten Referenznutzungsdaten 34 gemäß Figur 5 vergleichen und dann die zu der jeweiligen Nutzungskennzahl 39 passende Reinigungsintensität 35 ermitteln. Für den Umgebungsteilbereich 5 wurde beispielsweise eine Nutzungskennzahl 39 von 68 Prozent ermittelt. Diese Nutzungskennzahl 39 liegt in dem Bereich ʺ>50 % & < 80 %" der Referenznutzungsdaten 34. Für den Umgebungsteilbereich 5 ist somit eine definierte "mittlere Reinigungsintensität 35" anzuwenden. Die durch das Reinigungsgerät 1 anzuwendende Reinigungsintensität 35 kann wiederum in einer weiteren Datei 33 hinterlegt sein, auf welche die Steuereinrichtung 24 des Reinigungsgerätes 1 zugreifen kann, um eine optimale Reinigungstätigkeit in dem jeweiligen Umgebungsteilbereich 4 - 22 auszuführen.

Die Figuren 6 bis 8 zeigen eine etwas abweichende Anwendung eines erfindungsgemäßen Systems zum Reinigen einer Umgebung. Gemäß dieser Ausführungsform sind die Umgebungsteilbereiche 4 - 22 nicht von einem Nutzer des Systems vordefiniert, sondern werden je nach den von den Detektionseinrichtungen 2 detektierten Nutzungsdaten 25 automatisch durch die Recheneinrichtung 3 des Systems festgelegt. Zu diesem Zweck entsprechen die Umgebungsteilbereiche 4 - 22 zunächst den Detektionsbereichen 32 der Detektionseinrichtungen 2. Diese Detektionsbereiche 32 sind kreisförmige Bereiche, welche den Standort 31 der jeweiligen Detektionseinrichtung 2 als Kreismittelpunkt aufweisen. Die Ausgangssituation stellt Figur 6 dar.

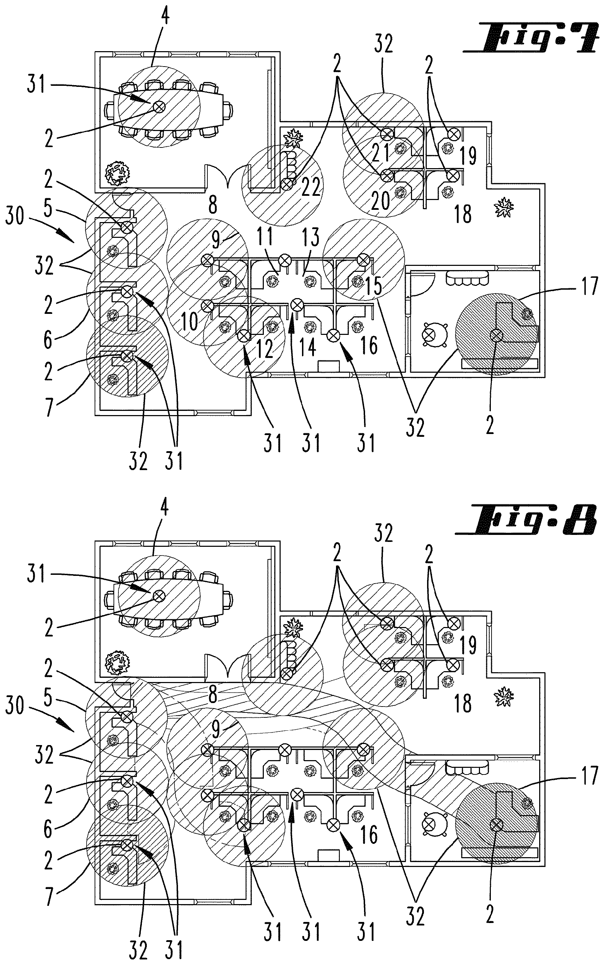

Figur 7 zeigt die erstellte Umgebungskarte 30 mit zu den jeweiligen Detektionsbereichen 32 gespeicherten Nutzungsdaten 25, welche einen Umfang der erfolgten Benutzung in dem jeweiligen Detektionsbereich 32 wiedergeben. Die benutzten Detektionsbereiche 32 können anschließend gemäß Figur 8 miteinander verbunden werden, wobei ein Pfad von einer Eingangstür der Büroetage zu jedem der betretenen Detektionsbereiche 32 nachvollzogen ist. Dieser festgelegte Pfad berücksichtigt diejenigen Wege, die innerhalb der Umgebung anwesende Personen mutmaßlich genutzt haben, um von einem Detektionsbereich 32 in einen anderen Detektionsbereich 32 zu gelangen. Die Detektionsbereiche 32, in welchen eine Bewegung detektiert wurde, können entsprechend als zu reinigende Umgebungsteilbereiche 4 - 22 definiert werden. Die Steuereinrichtung 24 des Reinigungsgerätes 1 steuert eine oder mehrere Reinigungstätigkeiten anschließend so, dass nur die benutzten Detektionsbereiche 32 und Zuwege gereinigt werden, unabhängig von einer Zugehörigkeit eines Detektionsbereiches 32 zu einem bestimmten Raum, d. h. es werden auch nur bestimmte Anteile von Räumen gereinigt, d. h. beispielsweise kein komplettes Einzelbüro, sondern nur ein bestimmter Teil eines Einzelbüros.

**Liste der Bezugszeichen**

| | | | |
|---|---|---|---|
| 1 | Reinigungsgerät | 26 | Nutzungsstartzeit |
| 2 | Detektionseinrichtung | 27 | Nutzungsdauer |
| 3 | Recheneinrichtung | 28 | Nutzungshäufigkeit |
| 4 | Umgebungsteilbereich | 29 | Nutzungsintensität |
| 5 | Umgebungsteilbereich | 30 | Umgebungskarte |
| 6 | Umgebungsteilbereich | 31 | Standort |
| 7 | Umgebungsteilbereich | 32 | Detektionsbereich |
| 8 | Umgebungsteilbereich | 33 | Datei |
| 9 | Umgebungsteilbereich | 34 | Referenznutzungsdaten |
| 10 | Umgebungsteilbereich | 35 | Reinigungsintensität |
| 11 | Umgebungsteilbereich | 36 | Reinigungselement |
| 12 | Umgebungsteilbereich | 37 | Rad |
| 13 | Umgebungsteilbereich | 38 | Navigationseinrichtung |
| 14 | Umgebungsteilbereich | 39 | Nutzungskennzahl |
| 15 | Umgebungsteilbereich | 40 | Server |
| 16 | Umgebungsteilbereich | | |
| 17 | Umgebungsteilbereich | | |
| 18 | Umgebungsteilbereich | | |
| 19 | Umgebungsteilbereich | | |
| 20 | Umgebungsteilbereich | | |
| 21 | Umgebungsteilbereich | | |
| 22 | Umgebungsteilbereich | | |
| 23 | Datenbank | | |
| 24 | Steuereinrichtung | | |
| 25 | Nutzungsdaten | | |

## Patentansprüche

1. System zum Reinigen einer Umgebung, mit mindestens einem sich selbsttätig fortbewegenden Reinigungsgerät (1), mindestens einer Detektionseinrichtung (2) zur Detektion eines Umgebungsparameters der Umgebung, einer Recheneinrichtung (3) zum Planen einer von dem Reinigungsgerät (1) in einem Umgebungsteilbereich (4 - 22) der Umgebung auszuführenden Reinigungstätigkeit in Abhängigkeit von dem detektierten Umgebungsparameter, einer Datenbank (23), in welcher ein Reinigungsplan mit mindestens einer zukünftig auszuführenden Reinigungstätigkeit gespeichert ist, wobei die Reinigungstätigkeit nach einer zeitlichen Angabe geplant ist, und wobei der Reinigungsplan einen der Reinigungstätigkeit zugeordneten Umgebungsteilbereich (4 - 22) beinhaltet, und einer Steuereinrichtung (24) zum Steuern der Reinigungstätigkeit anhand des Reinigungsplans, **dadurch gekennzeichnet, dass** die Detektionseinrichtung (2) eingerichtet ist, eine momentan stattfindende Nutzung eines Umgebungsteilbereiches (4 - 22) der Umgebung betreffende Nutzungsdaten (25) zu detektieren und an die Recheneinrichtung (3) zu übermitteln, wobei die Recheneinrichtung (3) eingerichtet ist, von der Detektionseinrichtung (2) während eines definierten Benutzungszeitraums detektierte Nutzungsdaten (25) aufzusummieren und den Reinigungsplan in Abhängigkeit von den aufsummierten Nutzungsdaten (25) zu planen, wobei je nach den von der Detektionseinrichtung (2) detektieren Nutzungsdaten der Reinigungsplan abgeändert wird, indem eine geplante Reinigungstätigkeit für einen Umgebungsteilbereich (4 - 22), in welchem die Detektionseinrichtung (2) keine Nutzung detektieren konnte, entfällt, und wobei eine geplante Reinigungstätigkeit für einen Umgebungsteilbereich (4 - 22), in welchem eine überdurchschnittlich starke Nutzung stattgefunden hat, in dem Reinigungsplan zeitlich früher eingeplant wird und/oder eine größere Reinigungsdauer umfasst.

2. System nach Anspruch 1, **dadurch gekennzeichnet, dass** die Nutzungsdaten (25) Informationen über eine Anwesenheit und/oder eine Fortbewegung mindestens einer sich in der Umgebung aufhaltenden Person aufweisen.

3. System nach Anspruch 1 oder 2, **dadurch gekennzeichnet, dass** die Detektionseinrichtung (2) einen Anwesenheitssensor und/oder einen Bewegungssensor und/oder einen Durchgangssensor und/oder einen Ortungssensor für Mobilgeräte aufweist.

4. System nach einem der vorhergehenden Ansprüche, **dadurch gekennzeichnet, dass** die Nutzungsdaten (25) eine Nutzungsstartzeit (26) und/oder eine Nutzungsdauer (27) und/oder eine Nutzungshäufigkeit (28) eines Umgebungsteilbereiches (4 - 22) und/oder eine Anzahl (29) von in dem Umgebungsteilbereich (4 - 22) anwesenden Personen aufweisen.

5. System nach einem der vorhergehenden Ansprüche, **dadurch gekennzeichnet, dass** die Datenbank (23) eine einen Grundriss der Umgebung aufweisende Umgebungskarte (30) aufweist, in welcher ein Standort (31) und/oder ein Detektionsbereich (32) der mindestens einen Detektionseinrichtung (2) eingetragen ist.

6. System nach Anspruch 5, **dadurch gekennzeichnet, dass** die Recheneinrichtung (3) eingerichtet ist, die Nutzungsdaten (25) der mindestens einen Detektionseinrichtung (2) zugehörig zu dem Standort (31) der Detektionseinrichtung (2) und/oder zugehörig zu dem Detektionsbereich (32) der Detektionseinrichtung (2) in der Umgebungskarte (30) und/oder einer mit der Umgebungskarte (30) verknüpften separaten Datei (33) zu speichern.

7. System nach Anspruch 5 oder 6, **dadurch gekennzeichnet, dass** die Recheneinrichtung (3) eingerichtet ist, in Abhängigkeit von den detektierten Nutzungsdaten (25) zu reinigende Umgebungsteilbereiche (4 - 22) und nicht zu reinigende Umgebungsteilbereiche (4 - 22) in der Umgebungskarte (30) zu definieren.

8. System nach einem der Ansprüche 5 bis 7, **dadurch gekennzeichnet, dass** in der Umgebungskarte (30) zusätzlich mindestens ein Umgebungsteilbereich (4 - 22) definiert ist, welcher unabhängig von den detektierten Nutzungsdaten (25) zu reinigen ist.

9. System nach einem der vorhergehenden Ansprüche, **dadurch gekennzeichnet, dass** die Recheneinrichtung (3) eingerichtet ist, die detektierten Nutzungsdaten (25) mit definierten Referenznutzungsdaten (34) zu vergleichen und in Abhängigkeit von einem daraus resultierenden Vergleichsergebnis eine von dem Reinigungsgerät (1) zu beachtende Reihenfolge der zu reinigenden Umgebungsteilbereiche (4 - 22) und/oder eine in einem Umgebungsteilbereich (4 - 22) anzuwendende Reinigungsintensität (35) und/oder eine Wiederholungshäufigkeit einer in einem Umgebungsteilbereich (4 - 22) ausführenden Reinigungstätigkeit zu definieren oder zu ändern.

10. System nach einem der vorhergehenden Ansprüche, **dadurch gekennzeichnet, dass** die Recheneinrichtung (3) eingerichtet ist, mehrere in unterschiedlichen Umgebungsteilbereichen (4 - 22) auszuführende Reinigungstätigkeiten in dem Reinigungsplan mit einer definierten Rangfolge so zueinander zu definieren, dass eine Reinigungstätigkeit in einem ersten Umgebungsteilbereich (4 - 22), dessen Nutzungsdatum (25) ein diesem zugeordnetes definiertes Referenznutzungsdatum (34) überschreitet, in der Rangfolge einen höheren Rang erhält und damit vorrangig vor einer Reinigungstätigkeit in einem zweiten Umgebungsteilbereich (4 - 22), dessen Nutzungsdatum (34) ein diesem zugeordnetes definiertes Referenznutzungsdatum (34) unterschreitet, ausgeführt wird.
